# EUROPÄISCHE PATENTSCHRIFT

(11) **EP 2 419 388 B1**
(45) Veröffentlichungstag und Bekanntmachung des Hinweises auf die Patenterteilung: **23.01.2013**
(21) Anmeldenummer: 10713925.5
(22) Anmeldetag: 13.04.2010
(51) Int. Cl.: C04B 24/04, C04B 28/02, C04B 40/06, C04B 24/08

(54) **ENTSTAUBTE PULVERFÖRMIGE BAUSTOFFZUSAMMENSETZUNG**
DUST-FREE POWDERY BUILDING MATERIAL COMPOSITION
COMPOSITION PULVÉRULENTE DE MATÉRIAU DE CONSTRUCTION DÉPOUSSIÉRÉE

(30) Priorität: 14.04.2009 EP 09157837
(43) Veröffentlichungstag der Anmeldung: 22.02.2012
(73) Patentinhaber: Construction Research & Technology GmbH, 83308 Trostberg (DE)
(72) Erfinder: STOHR, Werner, 86161 Augsburg (DE); HOETZL, Klaus-Dieter, 86199 Augsburg (DE); SEIDL, Wolfgang, 83349 Palling (DE); ZUERN, Siegfried, 86495 Eurasburg (DE); WACHE, Steffen, 83254 Breitbrunn (DE)
(86) Internationale Anmeldenummer: PCT/EP2010/054786
(87) Internationale Veröffentlichungsnummer: WO 2010/119017

(56) Entgegenhaltungen:
- WO-A1-02/068522
- DE-U1-202006 016 797

## Beschreibung

Gegenstand der vorliegenden Erfindung sind pulverförmige Baustoffzusammensetzungen enthaltend einen Ester von 2-Ethylhexansäure und einem Alkohol mit einem Siedepunkt von mindestens 160°C, Verfahren zur Herstellung derartiger Produkte sowie deren Verwendung.

Insbesondere trockene, pulverförmige Baustoffzusammensetzungen, wie hydraulisch abbindende Massen auf Basis von Zement, Puzzolan oder Kalk und nicht hydraulische abbindende Massen auf Basis von Gips und Luftkalk (z. B. Fliesenkleber, Fugenfüller, Spachtelmassen, Dichtschlämmen, Putze, Estriche usw.) neigen besonders bei Umfüll- und Mischprozessen zu einer deutlichen Staubbildung. Es wurden deshalb zahlreiche Versuche unternommen, um die Staubentwicklung in solchen Produkten zu vermeiden bzw. vollständig zu unterbinden.

So wurde bspw. versucht, die Staubentwicklung bei hydraulisch abbindenden Massen über den Mahlgrad bzw. die Kornzusammensetzung der pulverförmigen Produkte zu verringern, wobei jedoch die Verarbeitbarkeit gröberer Pulver deutlich schlechter ist.

Eine weitere bekannte Methode ist die Aggregation der feinteiligen Partikel z. B. mit Hilfe von Wasser, wässrigen Lösungen oder Dispersionen. So ist bspw. aus der US 4,780,143 bekannt, Klinker vor der Vermahlung zu Zement zur Verringerung der Staubentwicklung mit wässrigem Schaum zu versetzen. Auch wurden Versuche unternommen, Zementen für Spritzbetonzusammensetzungen Kunststoffdispersionen zuzusetzen, um so die Staubbildung zu erniedrigen. Eine derartige Aggregation ist allerdings dann nachteilig, wenn die so entstaubten hydraulisch abbindenden Massen nachträglich nicht mehr vermahlen werden. In feinpulvrigen Spachtelmassen sind gröbere Aggregationen nämlich nicht akzeptabel, da sie sich auf glatten Oberflächen deutlich abzeichnen.

Auch bekannt ist die Verwendung von so genannten Staubminderungsmitteln, die dem Anmachwasser von Zement zugesetzt werden, um das Stauben beim Aufbringen von Spritzbeton oder Spritzmörtel zu vermindern. Zu diesem Zweck werden insbesondere Polyethylenglykole oder Ethylenoxid/Propylenoxid-Blockcopolymere als Staubbindemittel bzw. Additive zur Verminderung der Staubbildung eingesetzt. Derartige Additive beeinflussen allerdings vielfach das Verarbeitungsverhalten negativ, da sie insbesondere zu einer Abbindeverzögerung oder einer ausgeprägten Hygroskopie der bauchemischen Produkte führen. Verwendet man alternativ hydrophobe Additive, zu denen ebenfalls Ethylenoxid/Propylenoxid-Blockcopolymere gehören, ergeben sich vor allem bei pulverförmigen bauchemischen Produkten Benetzungsschwierigkeiten.

Aus der WO 2006/084588 A1 ist die Verwendung von aliphatischen Kohlenwasserstoffen und Kohlenwasserstoffgemischen als Additive zur Verminderung des Staubens trockener und insbesondere pulverförmiger bauchemischer Produkte wie Fliesenkleber, Fugenfüller, Spachtelmassen, Dichtschlämmen usw. bekannt. Beschrieben werden insbesondere Kohlenwasserstoffe, die unter Normalbedingungen flüssig sind, wobei aliphatische Kohlenwasserstoffe, insbesondere in linearer oder verzweigter, gesättigter oder ungesättigter Form, mit Siedepunkten von 100 bis 400°C besonders erwähnt werden.

Das Gebrauchsmuster DE 20 2006 016 797 U1 betrifft einen staubarmen Trockenmörtel, welcher mindestens eine staubmindernde Komponente in einer Menge von 0,01 bis 10 Gew.-%, bezogen auf die Gesamttrockenmischung, enthält. Die staubmindernde Komponente wird hierbei ausgewählt aus der Reihe der Monoalkohole, wie z. B. 3-Methoxybutanol, Benzylalkohol, 1,2-Propandiol, Hexanol, Diacetonalkohol, Ethyldiglykol, Isopropanol, 2-Ethylhexanol und/oder Alkandiole wie 2-Methylpentan-2,4-diol, Neopentylglykol und n-Butan-2,5-diol. Weiterhin geeignet sind gemäß dieser Publikation Glykole, Polyethylenglykole, Fettalkohole und Polyphenylalkohole. Weiterhin werden aliphatische Ether, Zelluloseether, Alkoxylate und Methyl-/Ethyl-Fettsäureether erwähnt.

Mit den bekannten Maßnahmen nach dem Stand der Technik konnte das grundlegende Problem des Staubens pulverförmiger Baustoffzusammensetzungen nach wie vor nicht, vor allem unter wirtschaftlichen Gesichtspunkten, zufrieden stellend gelöst werden.

Weiterhin stellt die Emission von flüchtigen organischen Verbindungen (VOC, volatile organic compounds) aus Baustoffmischungen hinsichtlich des Umweltschutzes ein großes Problem dar. VOC-Emissionen werden definitionsgemäß durch flüchtige organische Verbindungen verursacht, welche einen Siedepunkt von weniger als 250°C bei Normaldruck besitzen (Richtlinie 2004/42/EG vom 21. April 2004 über die Begrenzung der Emissionen flüchtiger organischer Verbindungen). In der europäischen VOC-Richtlinie werden deshalb Höchstgrenzen für flüchtige organischen Verbindungen festgelegt.

Der vorliegenden Erfindung lag deshalb die Aufgabe zugrunde, pulverförmige Baustoffzusammensetzungen zur Verfügung zu stellen, welche eine deutlich verminderte Staubneigung aufweisen. Die hierzu verwendeten Additive sollten sich durch eine einfache Applizierbarkeit bei gleichzeitig hoher Wirksamkeit auszeichnen. Außerdem sollten sie bei der Anwendung nicht zur Klumpenbildung neigen und auch das geforderte Eigenschaftsprofil der Produkte, insbesondere die Kratzfestigkeit, Druckfestigkeit und Haftzugfestigkeit, nicht negativ beeinflussen. Eine weitere Aufgabe der vorliegenden Erfindung war es Additive zur Verfügung zu stellen, welche bei der Lagerung und Verwendung der Baustoffzusammensetzungen möglichst geringe Mengen an flüchtigen organischen Verbindungen (VOC, volatile organic compounds) emittieren.

Gelöst wurde diese Aufgabe durch die Bereitstellung einer pulverförmigen Baustoffzusammensetzung, enthaltend mindestens einen Ester von A) 2-Ethylhexansäure und B) einem Alkohol mit einem Siedepunkt von mindestens 160°C, bevorzugt 180°C, insbesondere bevorzugt 200°C.

Abgesehen davon, dass die Aufgabenstellung in Bezug auf sämtliche Vorgaben vollständig erfüllt werden konnte, hat sich überraschenderweise herausgestellt, dass die erfindungsgemäßen Ester eine anhaltend hohe Wirksamkeit über längere Zeit aufweisen und im Vergleich zum Stand der Technik nur eine sehr geringe oder keine VOC-Emissionen verursachen.

Bevorzugt handelt es sich bei dem Alkohol um einen mono-, bi-, tri-, oder tetrafunktionellen Alkohol. In einer weiteren Ausführungsform handelt es sich bei dem Alkohol um einen bi-, tri-, oder tetrafunktionellen Alkohol, wobei mindestens zwei OH-Gruppen des Alkohols mit 2-Ethylhexansäure verestert sind.

Besonders geeignet im Rahmen der vorliegenden Erfindung sind Ester, deren Alkohol lineare und/oder verzweigte und/oder cyclische, gesättigte und/oder ungesättigte Alkylreste enthält. Bevorzugt handelt es sich um lineare und/oder verzweigte, gesättigte Alkylreste, wobei insbesondere verzweigte Aikyireste bevorzugt sind.

In einer bevorzugten Ausführungsform handelt es sich bei dem Alkohol um Neopentylglycol, 2-Methyl-2-(hydroxymethyl)-1,3-propandiol, Pentaerythrit, 2-Ethylhexylalkohol oder Cetearylalkohol.

Bei den Estern des Neopentylglycols mit 2-Ethylhexansäure kann es sich erfindungsgemäß um Mono- oder Diester oder eine Mischung dieser Verbindungen handeln. Bevorzugt handelt es sich um Diester des Neopentylglycols. Im Falle des 2-Methyl-2-(hydroxymethyl)-1,3-propandiols kann es sich um Mono-, Di- oder Triester mit 2-Ethylhexansäure oder eine Mischung dieser Verbindungen handeln. Bevorzugt handelt es sich um Triester des 2-Methyl-2-(hydroxymethyl)-1,3-propandiols. Bei den Estern des Pentaerythrit mit 2-Ethylhexansäure kann es sich erfindungsgemäß um Mono-, Di-, Tri- oder Tetraester oder eine Mischung dieser Verbindungen handeln. In einer bevorzugten Ausführungsform handelt es sich um Tetraester des Pentaerythrits.

Spezifische Beispiele für die erfindungsgemäßen Alkohole sind weiterhin 1-Heptanol, 1-Octanol, Nonan-1-ol; Decan-1-ol, Undecan-1-ol, Dodecan-1-ol, Tridecan-1-ol, Tetra-decan-1-ol, Pentadecan-1-ol, Hexadecan-1-ol, Heptadecan-1-ol, Octadecan-1-ol, No-nadecan-1-ol, Eicosan-1-ol, Docosan-1-ol, Cyclohexanol, Cyclohexylmethanol, 2-Cyclohexylethanol, 3-Cyclohexyl-1-propanol, Isoheptanol, Isooctanol, Isononanol, Isodecanol, Isoundecanol, Isododecanol, Isotridecanol, Isotetradecanol, Isopentadecanol, Isohexadecanol, Isoheptadecanol, Isooctadecanol, Isononadecanol, Isoeicosanol, Isodocosanol, 2-Ethyl-1-hexanol, Trimethyl-1-hexanol, 6-Methyl-2-heptanol, 2-Propyl-1-pentanol, Methylcyclohexanol, 1-Methylcyclohexanol, 2-Methylcyclohexanol, 3-Methylcyclohexanol, 4-Methylcyclohexanol, Propan-1,2-diol, Propan-1,3-diol, 2-Methylpropan-1,3-diol, Butan-1,2-diol, Butan-1,3-diol, 1,4-Butandiol, 2,3-Butandiol, 1,5-Pentandiol, 1,2-Pentandiol, 1,6-Hexandiol, 1,8-Octandiol, 1,9-Nonandiol, 1,10-Decandiol, 1,2,3-Propantriol, Neopentylglykol, Trimethylolethan, Trimethylolpropan, Trimethylolhexan, Pentaerythritol, 2-Methyl-2-propyl-1,3-propandiol, 2,2-Diethyl-1,3-propandiol, 1,4-Cyclohexandiol, 1,4-Cyclohexandimethylol,1,1-Cyclohexandimethylol,, 2-Ethylhexan-2,3-diol, 2-Methylpentan-2,4-diol, 2,2,4-Trimethyl- 1,3-pentandiol, 1 ,3-Cyclohexandimethanol, 2,6-Dimethyl-4-heptanol und 2,5-dimethyl-2,5-hexandiol.

Verfahren zur Herstellung von Estern des Neopentylglycols werden in WO 02068522 auf Seite 6 bis 11 offenbart. Das Herstellverfahren lässt sich analog auf die anderen erfindungsgemäßen Ester übertragen.

Als besonders vorteilhaft hat es sich erwiesen, wenn die erfindungsgemäß eingesetzten Ester in flüssiger Form verwendet werden. Der Vorteil dieser Variante ist darin zu sehen, dass sich flüssige Anwendungsformen besser auf die zu entstaubende, pulverförmige Baustoffzusammensetzung aufbringen lassen und dass der Auftrag insgesamt im Vergleich zu festen Varianten homogener erfolgt. Außerdem werden im Falle flüssiger erfindungsgemäßer Ester geringere Mengen benötigt. Selbstverständlich sind auch die Adhäsion bzw. die Anfangshaftung flüssiger Additive im Vergleich zu festen Varianten verbessert. Die erfindungsgemäß eingesetzten Ester besitzen hierbei bevorzugt eine kinematische Viskosität bei 20°C von 0,1 bis 150 mm²/s, insbesondere 2 bis 50 mm²/s.

Die pulverförmigen Baustoffzusammensetzungen, enthaltend mindestens einen erfindungsgemäß eingesetzten Ester, sollen im Rahmen der vorliegenden Erfindung vorzugsweise in trockener Form vorliegen, wobei hierunter zu verstehen ist, dass diese einen Wassergehalt nach Karl-Fischer von weniger als 5 Gew.-%, vorzugsweise weniger als 1 Gew.-% und besonders bevorzugt von weniger als 0,1 Gew.-% aufweisen.

Die durchschnittliche Partikelgröße in den jeweiligen pulverförmigen Baustoffzusammensetzungen sollte vorzugsweise von 0,01 bis 5 mm reichen. Als besonders vorteilhaft hat es sich erwiesen, wenn die pulverförmigen Baustoffzusammensetzungen einen durch Laserdiffraktometrie bestimmten Korngrößenanteil von mindestens 2 Gew.-% ≤ 68 µm und mindestens 10 Gew.-% ≤ 200 µm aufweisen. Besonders bei den sehr feinteiligen Varianten kommt das Entstaubungspotenzial der erfindungsgemäß verwendeten Ester besonders deutlich zum Tragen.

Grundsätzlich lassen sich mit den erfindungsgemäß verwendeten Estern beliebige pulverförmige Baustoffzusammensetzungen signifikant entstauben. Stellvertretend für die Baustoffzusammensetzungen sollen insbesondere hydraulisch abbindende Zementbasierte und nicht hydraulisch abbindende Gips-basierte Massen, so genannte Werktrockenmörtel genannt sein, bei denen feingemahlene mineralische Stoffe unter Wasseraufnahme an Luft oder unter Wasser steinartig erhärten und nach ihrem Aushärten funktionsfähig sind. Derartige Werktrockenmörtel kommen nämlich im Allgemeinen als feine Pulver in den Handel, welche dann in der endgültigen Abmischung an der Baustelle mit dem Anmachwasser angesetzt werden. Beim Umfüllen bzw. Entleeren der Transportgebinde kommt es dann zu der nachteiligen starken Staubentwicklung, welche durch den Einsatz der nun vorgeschlagenen Ester deutlich reduziert oder vollständig unterbunden werden kann.

Als besonders vorteilhaft hat sich die erfindungsgemäße Verwendung dann erwiesen, wenn es sich bei dem Werktrockenmörtel um Fliesenkleber, Fugenfüller, Spachtelmassen, Dichtschlämmen, Reparaturmörtel, Ausgleichsmörtel, Armierungskleber, Kleber für Wärmedämmverbundsysteme (WDVS), mineralische Putze, Feinspachtel und Estrichsysteme handelt.

Auch geeignet für die erfindungsgemäß verwendeten Additive sind pulverförmige Polymere und insbesondere redispergierbare Polymerpulver oder Fliesenkleber, welche die pulverförmigen Baustoffzusammensetzungen darstellen oder welche als deren pulverförmige Bestandteile vorliegen. Die genannten redispergierbaren Polymerpulver sind vorzugsweise aus mindestens einem Vertreter der Reihe Vinylacetat, Styrol, Butadien, Ethylen, Versatinsäure-Vinylester, Harnstoff-Formaldehyd-Kondensationsprodukte und Melamin-Formaldehyd-Kondensationsprodukte aufgebaut.

Um das Entstauben oder die Staubminderung im gewünschten vorteilhaften Ausmaß auch tatsächlich zu erreichen, empfiehlt es sich, die erfindungsgemäßen Ester der bevorzugt trockenen, pulverförmigen Baustoffzusammensetzungen in einer Menge von 0,01 bis 4 Gew.-%, vorzugsweise von 0,3 bis 3 Gew.-% und besonders bevorzugt von 0,5 bis 2,0 Gew.-% zuzusetzen.

Selbstverständlich können die jeweils zu entstaubenden pulverförmigen Baustoffzusammensetzungen, denen die Additive erfindungsgemäß zugesetzt werden, neben den genannten feinteiligen Partikeln zusätzlich mindestens einen Vertreter der Reihe Bindemittel, Füllstoffe, Verdicker, Wasserretentionsmittel, Dispergiermittel, Rheologieverbesserer, Entschäumer, Verzögerer, Beschleuniger, Zusatzstoffe, Pigmente, organische oder anorganische Fasern enthalten.

In einer bevorzugten Ausführungsform umfasst die pulverförmige Baustoffzusammensetzunge 10 bis 75 Gew.-% Füllstoffe wie Quarzsand, Kalksteinmehl, Schwerspat, Leichtfüllstoff und/oder Schiefermehl, 1 bis 5 Gew.-% Dispersionspulver, 0,1 bis 5 Gew.-% Wasserretentionsmittel wie Celluloseether und/oder SISA (Salt Insensitive Superabsorbents), 0,1 bis 3 Gew.-% Verdicker wie Stärkeether und/oder Polyacrylamid, 0,1 bis 3 Gew.-% Zementbeschleuniger wie Calciumformiat und 0,1 bis 3 Gew.-% Zementverzögerer wie Citrat.

Grundsätzlich wird empfohlen, dass die pulverförmigen Baustoffzusammensetzungen, die im Rahmen der vorliegenden Erfindung entstaubt werden sollen, einen Anteil an Bindemittel im Bereich von 5 bis 80 Gew.-%, vorzugsweise von 10 bis 70 Gew.-% und besonders bevorzugt von 15 bis 50 Gew.-% aufweisen.

Die erfindungsgemäß eingesetzten Ester sind dabei im allgemeinen oxidationsstabil und gehen insbesondere unter Luftsauerstoff keine chemischen Reaktionen ein, so dass ihre Entstaubungseigenschaften in Bezug auf die pulverförmigen Baustoffzusammensetzungen auch über einen langen Lagerungszeitraum zumindest im wesentlichen unverändert erhalten bleiben.

Erfindungsgemäß bevorzugt ist es, wenn die als Entstaubungsadditive eingesetzten Ester in den Baustoffzusammensetzungen bei einer Temperatur von 107 °C einen Verdampfungsverlust über 24 Stunden von weniger als 5 Gew.-%, vorzugsweise von weniger als 2 Gew.-%, besonders bevorzugt von weniger als 1 Gew.-% aufweisen. Auf diese Weise wird gewährleistet, dass einerseits eine Langzeitentstaubung in Bezug auf die erfindungsgemäß behandelten pulverförmigen Baustoffzusammensetzungen erreicht wird und andererseits die erfindungsgemäß behandelten Produkte zumindest im wesentlichen geruchsfrei bzw. geruchsarm sind, da keine Ester in nennenswerten Mengen freigesetzt werden.

Die erfindungsgemäßen Baustoffmischungen werden vor oder bei ihrer Verwendung in der Regel mit Wasser vermischt, wobei überwiegend alkalische Mischungen entstehen. Es ist bekannt, dass Carbonsäureester in diesen alkalischen Mischungen zumindest teilweise hydrolysieren. Da die Hydrolyseprodukte der Ester ein signifikant niedrigeres Molekulargewicht aufweisen, war mit einer deutlichen VOC-Emission zu rechnen. Überraschend wurde hierbei jedoch gefunden, dass die erfindungsgemäßen Ester in den Baustoffmischungen auch nach der Zugabe von Wasser nur eine sehr geringe oder keine VOC-Emissionen verursachen. Dies war nicht zu erwarten, da die Hydrolyseprodukte einen relativ niedrigen Siedepunkt aufweisen. 2-Ethylhexansäure als efindungsgemäße Carbonsäure weist einen Siedepunkt von 227°C auf und die erfindungsgemäßin Alkohole einen Siedepunkt von mindestens 160°C.

Ein weiterer Aspekt der vorliegenden Erfindung ist die Verwendung mindestens eines erfindungsgemäßen Esters als Additiv in pulverförmigen Baustoffzusammensetzungen zur Verminderung des Staubens.

Die vorliegende Erfindung umfasst weiterhin ein Verfahren zur Herstellung insbesondere trockener, pulverförmiger Baustoffzusammensetzungen mit einem reduzierten Staubbildungs- und Staubungsverhalten. Dieses Verfahren ist erfindungsgemäß dadurch gekennzeichnet, dass man die pulverförmigen Baustoffzusammensetzungen mit mindestens einem erfindungsgemäßen Ester als Entstaubungsmittel in Kontakt bringt, was insbesondere durch Aufsprühen erfolgen kann. Die hierbei verwendeten Ester weisen die bereits genannten Eigenschaften auf.

Von der vorliegenden Erfindung sind schließlich auch insbesondere trockene, pulverförmige Baustoffzusammensetzungen mit umfasst, die ein vermindertes Staubungs- und Staubbildungsverhalten aufweisen und die herstellbar sind durch das eben beschriebene Verfahren, nämlich durch in Kontakt bringen und insbesondere durch Aufsprühen unter Rühren. Bei diesen Produkten handelt es sich wiederum in vorteilhafter Weise um Zement- und/oder Kalk- und/oder Gips-basierte Massen oder Bindemittel wie z. B. Trockenmörtel und insbesondere Fliesenkleber, Fugenmassen, Spachtelmassen, Dichtschlämmen, Reparaturmörtel, Ausgleichsmörtel, Armierungskleber, WDVS-Kleber, mineralische Putze, Feinspachtel und Estrichsysteme.

Im Allgemeinen erfolgt die bereits mehrfach erwähnte Beaufschlagung bzw. das in Kontakt bringen durch Aufsprühen oder Bedüsen der jeweils gewählten Entstaubungs- oder Staubminderungsadditive auf die pulverförmigen Baustoffzusammensetzungen. Auf diese Weise kann der homogene Auftrag in einfacher Weise bei gleichzeitig guter Haftung und Anfangsadhäsion gewährleistet werden. Selbstverständlich kann das in Kontakt bringen der pulverförmigen Baustoffzusammensetzungen mit dem jeweiligen Additiv auch auf jede andere geeignete Art und Weise erfolgen, wie sie dem Fachmann geläufig sind. In Frage kommen hier insbesondere auch das Abmischen bzw. Unterrühren der flüssigen Additive, wobei jedoch der Sprühauftrag eindeutig zu bevorzugen ist, da dies die einfachste und wirtschaftlich attraktivste Auftragungsvariante darstellt.

Die im Rahmen der erfindungsgemäßen Verwendung eingesetzten Ester können in ihrer Staubminderungs- bzw. Entstaubungswirkung natürlich auch durch sämtliche andere geeignete Additive unterstützt werden. Auch wenn die vorgeschlagenen Ester in den überwiegenden Anwendungsfällen vollkommen ausreichend sind, um das Staubungsverhalten pulverförmiger Baustoffzusammensetzungen zu reduzieren bzw. vollständig zu unterbinden, so kann es in Spezialfällen durchaus sinnvoll sein, die vorteilhafte Wirkung dieser Additive durch andere Zusatzmittel zu unterstützen, welche ihrerseits ebenfalls mindernd auf das Staubungsverhalten wirken.

Insgesamt werden mit den vorgeschlagenen Estern Additive zur Verfügung gestellt, mit denen pulverförmige Baustoffzusammensetzungen auf einfache und wirtschaftliche Art und Weise homogen und stabil entstaubt werden können, so dass vor allem unter dem Gesichtspunkt der Arbeitssicherheit, insbesondere beim Umfüll- und Verarbeitungsvorgang, ein deutlicher Fortschritt festzustellen ist. Weiterhin wird das geforderte Eigenschaftsprofil der Baustoffzusammensetzungen, insbesondere die Kratzfestigkeit, Druckfestigkeit und Haftzugfestigkeit, im Vergleich zum Stand der Technik, durch die erfindungsgemäßen Additive nicht negativ beeinflusst.

Die nachfolgenden Beispiele verdeutlichen die Vorteile der vorliegenden Erfindung.

### Beispiele:

### Trockenmörtelmischungen

### Mischung 1

| | |
|---|---|
| Portlandzement CEM I | 85,0 Gew.-% |
| Leichtfüllstoff (Poraver sehr fein der Dennert Poraver GmbH) | 15,0 Gew.-% |

### Fliesenkleber 1

| | |
|---|---|
| Portlandzement CEM I | 37,0 Gew.-% |
| Quarzsand 0,1-0,5 mm | 47,5 Gew.-% |
| Hüttensandmehl | 14,3 Gew.-% |
| Kalksteinmehl < 0,1 mm | 3,3 Gew.-% |
| Celluloseether | 0,9 Gew.-% |
| Dispersionspulver (Elotex AP 200 der Elotex AG) | 1,5 Gew.-% |
| Erhärtungsbeschleuniger (Kalziumformiat) | 0,5 Gew.-% |

### Fliesenkleber 2

| | |
|---|---|
| Portlandzement CEM I | 65,0 Gew.-% |
| Leichtfüllstoff < 0,1 mm | 15,0 Gew.-% |
| Kalksteinmehl < 0,1 mm | 15,6 Gew.-% |
| Celluloseether | 0,9 Gew.-% |
| Dispersionspulver (Elotex AP 200 der Elotex AG) | 3,0 Gew.-% |
| Erhärtungsbeschleuniger (Kalziumformiat) | 0,5 Gew.-% |

### Messmethode:

Die Messungen wurden in Anlehnung an DIN 55999-2 "Bestimmung einer Maßzahl für die Staubentwicklung von Pigmenten und Füllstoffen -Teil 2: Fallmethode" durchgeführt.

Zur Messung wurde das "Staubmessgerät SP3" der LORENZ MESSGERÄTEBAU GmbH & Co. KG verwendet.

### Probenherstellung:

Die jeweilige Trockenmörtelmischung wurde in einem Mischgefäß vorgelegt. Das erfindungsgemäße Entstaubungsadditiv wurde im angegebenen Mengenverhältnis auf die Trockenmörtelmischung mittels Drucksprüher ("Blumenspritze") während des Mischvorgangs aufgebracht und mit dem Mörtel vermischt.

### Ergebnisse:

Versuche wurden mit Fliesenkleber 2 (mit Leichtfüllstoff) in einer Dosierung von 2 Gew.-% bezogen auf den Trockenmörtel durchgeführt. Die Angabe in Klammer hinter der Staubzahl ist die Lagerdauer in Tagen.

| | Staubzahlen: |
|---|---|
| Referenz (ohne Entstaubungsmittel) | 160 (7 d) |

| Vergleichsversuche: | |
|---|---|
| Nycobase 8210 (= Neopentylglycol-Cetearylsäureester) | 50 (14 d) |
| Nycobase 8216 (= Dipropylenglycol-cetearlysäureester) | 60 (7 d) |
| Nycobase 8103 (= Trimethylolpropan-cetearyllsäureester) | 50 (14 d) |
| Waglinol 3212 (= Methyllaurat) | 40 (7 d) |
| Waglinol 6012 (= Isopropyllaurat) | 40 (7 d) |

| Erfindungsgemäß: | |
|---|---|
| Waglinol 250 (= 2-Ethylhexansäure-cetearylester) | 5 (168 d) |
| 2-Ethylhexansäure-ethylhexylester | 8 (56 d) |

| | |
|---|---|
| Nycobase von Fa.: Deutsche NYCO GmbH Waglinole von Fa.: Industrial Química Lasem S.A. | |

Weitere Versuche wurden mit unterschiedlichen Konzentrationen des Entstaubungsmittels durchgeführt:

| | Staubzahl nach 1 d | Staubzahl nach 3d | Staubzahl nach 7d |
|---|---|---|---|
| Mischung 1 (Vergleich) | 117 | - | - |
| Mischung 1 + 0,5 % Soldoc VF8 (Erfindungsgemäß) | 42 | 44 | 42 |
| Mischung 1 + 1,0 % Soldoc VF8 (Efindungsgemäß) | 22 | 22 | 19 |
| Mischung 1 + 1,5 % Soldoc VF8 (Erfindungsgemäß) | 14 | 12 | 11 |
| Mischung 1 + 0,5 % Hexamoll DINCH | 100 | 110 | 114 |
| Mischung 1 + 1,0 % Hexamoll DINCH | 84 | 67 | 68 |
| Mischung 1 + 1,5 % Hexamoll DINCH | 75 | 54 | 43 |

| | Staubzahl nach 1d | Staubzahl nach 7d | Staubzahl nach 56d |
|---|---|---|---|
| Fliesenkleber 1 (Vergleich) | 142 | - | - |
| Fliesenkleber 1 + 0,75 % Soldoc VF8 (Erfindungsgemäß) | 11 | 12 | 22 |
| Fliesenkleber 1 + 1,0 % Soldoc VF8 (Erfindungsgemäß) | 8 | 7 | 19 |
| Fliesenkleber 2 (Vergleich) | 166 | - | - |
| Fliesenkleber 2 + 1,0 % Soldoc VF8 (Erfindungsgemäß) | 8 | 10 | 9 |
| Fliesenkleber 2 + 3 % Soldoc VF8 (Erfindungsgemäß) | 3 | 3 | 3 |

| | | | |
|---|---|---|---|
| Soldoc VF8: Neopentylglycol-di-2-ethylhexanoat der Industrial Química Lasem S.A. Hexamoll DINCH: Diisononylcyclohexan-1,2-dicarboxylat der BASF SE d: Tage | | | |

### Messmethode VOC-Emission:

Die Prüfungen wurden in Übereinstimmung mit der GEV-Prüfmethode in der Fassung vom 26.04.2007 (siehe www.emicode.de) durchgeführt.

### Probenherstellung:

Fliesenkleber 2 wurde in ein Mischgefäß vorgelegt. Das erfindungsgemäße Entstaubungsadditiv Soldoc VF 8 wurde in einer Menge von 1,5 Gew.-% auf die Trockenmörtelmischung mittels Drucksprüher ("Blumenspritze") aufgebracht und mit dem Mörtel vermischt.

### Ergebnisse:

### K-Stoffe-Prüfung nach 72 Stunden.

| Stoff | Konzentration | geforderte Bestimmungsgrenze |
|---|---|---|
| Acrylamid | u. B. | 10 µg/m³ |
| Acrylnitril | u. B. | 10 µg/m³ |
| Benzol | u. B. | 02 µg/m³ |
| 1,4 Dioxan | u. B. | 50 µg/m³ |
| Vinylacetat | u. B. | 50 µg/m³ |
| Formaldehyd < | 5 µg/m³ | 50 µg/m³ |
| Acetaldehyd | 10 µg/m³ | 50 µg/m³ |

| | | |
|---|---|---|
| u. B.: unter Bestimmungsgrenze | | |

Emissionsprüfung nach 10 Tagen: Summe TVOC 35 µg/m³
Somit erreichte Klasse: EC1 "Sehr emissionsarm".

Die Einstufung entspricht den Kriterien für "Mineralische Produkte mit überwiegend anorganischen Bindemittel" (EC1 < 200 µg/m³ TVOC).

## Patentansprüche

1. Pulverförmige Baustoffzusammensetzung, enthaltend mindestens einen Ester von
A) 2-Ethylhexansäure und
B) einem Alkohol mit einem Siedepunkt von mindestens 160°C.

2. Baustoffzusammensetzung nach Anspruch 1, **dadurch gekennzeichnet, dass** es sich bei dem Alkohol um einen mono-, bi-, tri-, oder tetrafunktionellen Alkohol handelt.

3. Baustoffzusammensetzung nach Anspruch 1, **dadurch gekennzeichnet, dass** es sich bei dem Alkohol um einen bi-, tri-, oder tetrafunktionellen Alkohol handelt, wobei mindestens zwei OH-Gruppen des Alkohols mit 2-Ethylhexansäure verestert sind.

4. Baustoffzusammensetzung nach einem der Ansprüche 1 bis 3, **dadurch gekennzeichnet, dass** der Alkohol lineare und/oder verzweigte und/oder cyclische, gesättigte und/oder ungesättigte Alkylreste enthält.

5. Baustoffzusammensetzung nach einem der Ansprüche 1 bis 4, **dadurch gekennzeichnet, dass** es sich bei dem Alkohol um Neopentylglycol, 2-Methyl-2-(hydroxymethyl)-1,3-propandiol, Pentaerythrit, 2-Ethylhexylalkohol oder Cetearylalkohol handelt.

6. Baustoffzusammensetzung nach einem der Ansprüche 1 bis 5, **dadurch gekennzeichnet, dass** es sich um mindestens einen Diester von Neopentylglycol handelt.

7. Baustoffzusammensetzung nach einem der Ansprüche 1 bis 6, **dadurch gekennzeichnet, dass** diese pulverförmige Polymere und insbesondere redispergierbare Polymerpulver enthält.

8. Baustoffzusammensetzung nach Anspruch 7, **dadurch gekennzeichnet, dass** die redispergierbaren Polymerpulver aufgebaut sind aus mindestens einem Vertreter der Reihe Vinylacetat, Styrol, Butadien, Ethylen, Versatinsäure, Vinylester, Harnstoff-Formaldehyd-Kondensationsprodukte und Melamin-Formaldehyd-Kondensationsprodukte.

9. Baustoffzusammensetzung nach einem der Ansprüche 1 bis 8, **dadurch gekennzeichnet, dass** diese einen Ester entsprechend einem der Ansprüche 1 bis 6 in einer Menge von 0,01 bis 4 Gew.-% enthält.

10. Baustoffzusammensetzung nach einem der Ansprüche 1 bis 9, **dadurch gekennzeichnet, dass** diese zusätzlich mindestens einen Vertreter der Reihe Bindemittel, Füllstoffe, Verdicker, Wasserretentionsmittel, Dispergiermittel, Rheologieverbesserer, Entschäumer, Verzögerer, Beschleuniger, Zusatzstoffe, Pigmente, organische oder anorganische Fasern enthält.

11. Baustoffzusammensetzung nach einem der Ansprüche 1 bis 10, **dadurch gekennzeichnet, dass** diese einen Anteil an hydraulischem Bindemittel im Bereich von 5 bis 80 Gew.-% aufweist.

12. Baustoffmischung nach Ansprüchen 1 bis 11, **dadurch gekennzeichnet, dass** diese mindestens einen Vertreter der Reihe 10 bis 75 Gew.-% Füllstoffe, 1 bis 5 Gew.-% Dispersionspulver, 0,1 bis 5 Gew.-% Wasserretentionsmittel, 0,1 bis 3 Gew.-% Verdicker, 0,1 bis 3 Gew.-% Zementbeschleuniger und 0,1 bis 3 Gew.-% Zementverzögerer enthält.

13. Verwendung mindestens eines Esters nach einem der Ansprüche 1 bis 6 als Additiv in pulverförmigen Baustoffzusammensetzungen zur Verminderung des Staubens.

14. Verfahren zur Herstellung einer pulverförmigen Baustoffzusammensetzung, **dadurch gekennzeichnet, dass** man die pulverförmige Baustoffzusammensetzung mit mindestens einem Ester nach einem der Ansprüche 1 bis 6 als Entstaubungsadditiv in Kontakt bringt, insbesondere durch Aufsprühen unter Rühren.

## Claims

1. Pulverulent building material composition containing at least one ester of
A) 2-ethylhexanoic acid and
B) an alcohol having a boiling point of at least 160°C.

2. Building material composition according to Claim 1, **characterized in that** the alcohol is a monofunctional, bifunctional, trifunctional or tetrafunctional alcohol.

3. Building material composition according to Claim 1, **characterized in that** the alcohol is a bifunctional, trifunctional or tetrafunctional alcohol, with at least two OH groups of the alcohol being esterified by 2-ethylhexanoic acid.

4. Building material composition according to any of Claims 1 to 3, **characterized in that** the alcohol contains linear and/or branched and/or cyclic, saturated and/or unsaturated alkyl radicals.

5. Building material composition according to any of Claims 1 to 4, **characterized in that** the alcohol is neopentyl glycol, 2-methyl-2-(hydroxymethyl)-1,3-propanediol, pentaerythritol, 2-ethylhexyl alcohol or ceteryl alcohol.

6. Building material composition according to any of Claims 1 to 5, **characterized in that** the ester is at least one diester of neopentyl glycol.

7. Building material composition according to any of Claims 1 to 6, **characterized in that** it contains pulverulent polymers and in particular redispersible polymer powders.

8. Building material composition according to Claim 7, **characterized in that** the redispersible polymer powders are made up of at least one representative of the group consisting of vinyl acetate, styrene, butadiene, ethylene, Versatic acid, vinyl esters, urea-formaldehyde condensation products and melamine-formaldehyde condensation products.

9. Building material composition according to any of Claims 1 to 8, **characterized in that** it contains an ester corresponding to any of Claims 1 to 6 in an amount of from 0.01 to 4% by weight.

10. Building material composition according to any of Claims 1 to 9, **characterized in that** it additionally contains at least one representative of the group consisting of binders, fillers, thickeners, water retention agents, dispersants, rheology improvers, antifoams, retarders, accelerators, additives, pigments, organic or inorganic fibres.

11. Building material composition according to any of Claims 1 to 10, **characterized in that** it has a proportion of hydraulic binder in the range from 5 to 80% by weight.

12. Building material mixture according to any of Claims 1 to 11, **characterized in that** it contains at least one representative of the group consisting of from 10 to 75% by weight of fillers, from 1 to 5% by weight of dispersion powders, from 0.1 to 5% by weight of water retention agents, from 0.1 to 3% by weight of thickeners, from 0.1 to 3% by weight of cement accelerators and from 0.1 to 3% by weight of cement retarders.

13. Use of at least one ester according to any of Claims 1 to 6 as additive in pulverulent building material compositions for reducing dusting.

14. Process for producing a pulverulent building material composition, **characterized in that** the pulverulent building material composition is brought into contact with at least one ester according to any of Claims 1 to 6 as dust-reducing additive, in particular by spraying on while stirring.

## Revendications

1. Composition de matériau de construction sous forme de poudre, contenant au moins un ester
A) d'acide 2-éthylhexanoïque et
B) d'un alcool présentant un point d'ébullition d'au moins 160°C.

2. Composition de matériau de construction selon la revendication 1, **caractérisée en ce qu'**il s'agit, pour l'alcool, d'un alcool monofonctionnel, difonctionnel, trifonctionnel ou tétrafonctionnel.

3. Composition de matériau de construction selon la revendication 1, **caractérisée en ce qu'**il s'agit, pour l'alcool, d'un alcool difonctionnel, trifonctionnel ou tétrafonctionnel, au moins deux groupes OH de l'alcool étant estérifiés par l'acide 2-éthylhexanoïque.

4. Composition de matériau de construction selon l'une quelconque des revendications 1 à 3, **caractérisée en ce que** l'alcool contient des radicaux alkyle linéaire et/ou ramifiés et/ou cycliques, saturés et/ou insaturés.

5. Composition de matériau de construction selon l'une quelconque des revendications 1 à 4, **caractérisée en ce qu'**il s'agit, pour l'alcool, de néopentylglycol, de 2-méthyl-2-(hydroxyméthyl)-1,3-propanediol, de pentaérythritol, d'alcool 2-éthylhexylique ou d'alcool cétéarylique.

6. Composition de matériau de construction selon l'une quelconque des revendications 1 à 5, **caractérisée en ce qu'**il s'agit d'au moins un diester du néopentylglycol.

7. Composition de matériau de construction selon l'une quelconque des revendications 1 à 6, **caractérisée en ce qu'**elle contient des polymères sous forme de poudre et en particulier des poudres polymères redispersibles.

8. Composition de matériau de construction selon la revendication 7, **caractérisée en ce que** les poudres polymères redispersibles sont formées à partir d'au moins un représentant de la série acétate de vinyle, styrène, butadiène, éthylène, acide versatique, ester de vinyle, produits de condensation d'urée-formaldéhyde et produits de condensation de mélamine-formaldéhyde.

9. Composition de matériau de construction selon l'une quelconque des revendications 1 à 8, **caractérisée en ce qu'**elle contient un ester selon l'une quelconque des revendications 1 à 6 en une quantité de 0,01 à 4% en poids.

10. Composition de matériau de construction selon l'une quelconque des revendications 1 à 9, **caractérisée en ce qu'**elle contient en outre au moins un représentant de la série liants, charges, épaississants, agents de rétention d'eau, dispersants, agents d'amélioration de la rhéologie, antimousses, retardateurs, accélérateurs, additifs, pigments, fibres organiques ou inorganiques.

11. Composition de matériau de construction selon l'une quelconque des revendications 1 à 10, **caractérisée en ce qu'**elle présente une proportion de liant hydraulique dans la plage de 5 à 80% en poids.

12. Mélange de matériau de construction selon les revendications 1 à 11, **caractérisé en ce qu'**il contient au moins un représentant de la série 10 à 75% en poids de charges, 1 à 5% en poids de poudre de dispersion, 0,1 à 5% en poids d'agent de rétention d'eau, 0,1 à 3% en poids d'épaississants, 0,1 à 3% en poids d'accélérateurs de ciment et 0,1 à 3% en poids de retardateurs de ciment.

13. Utilisation d'au moins un ester selon l'une quelconque des revendications 1 à 6 comme additif dans des compositions de matériau de construction sous forme de poudre pour diminuer la formation de poussière.

14. Procédé pour la préparation d'une composition de matériau de construction sous forme de poudre, **caractérisé en ce qu'**on met en contact la composition de matériau de construction sous forme de poudre avec au moins un ester selon l'une quelconque des revendications 1 à 6 comme additif d'élimination de la poussière, en particulier par pulvérisation sous agitation.
